# EUROPÄISCHE PATENTSCHRIFT

(11) **EP 2 373 898 B1**
(45) Veröffentlichungstag und Bekanntmachung des Hinweises auf die Patenterteilung: **19.03.2014**
(21) Anmeldenummer: 09795683.3
(22) Anmeldetag: 25.11.2009
(51) Int. Cl.: F16C 33/49, F16C 33/48

(54) **KAMMKÄFIG FÜR EIN WÄLZLAGER, INSBESONDERE EIN DOPPELKAMMKÄFIG FÜR EIN ZYLINDERROLLENLAGER, WÄLZLAGER UND VERFAHREN ZUM HERSTELLEN EINES KAMMKÄFIGS FÜR EIN WÄLZLAGER**
ROLLER CAGE FOR A ROLLING BEARING, PARTICULARLY A DOUBLE ROLLER CAGE FOR A CYLINDER ROLLING BEARING, ROLLING BEARING, AND METHOD FOR PRODUCING A ROLLER CAGE FOR A ROLLING BEARING
CAGE EN FORME DE PEIGNE POUR UN PALIER À ROULEMENT, EN PARTICULIER CAGE DOUBLE EN FORME DE PEIGNE POUR UN ROULEMENT À ROULEAUX CYLINDRIQUES, PALIER À ROULEMENT ET PROCÉDÉ POUR PRODUIRE UNE CAGE EN FORME DE PEIGNE POUR UN PALIER À ROULEMENT

(30) Priorität: 03.12.2008 DE 102008060320
(43) Veröffentlichungstag der Anmeldung: 12.10.2011
(73) Patentinhaber: Schaeffler Technologies GmbH & Co. KG, 91074 Herzogenaurach (DE)
(72) Erfinder: MUHAMAD, Ibrahim, 18057 Rostock (DE)
(86) Internationale Anmeldenummer: PCT/DE2009/001672
(87) Internationale Veröffentlichungsnummer: WO 2010/063258

(56) Entgegenhaltungen:
- EP-A1- 1 816 362
- WO-A2-2005/019666
- DE-A1-102004 043 374
- DE-U1- 20 020 397
- US-A- 2 611 670

## Beschreibung

### Gebiet der Erfindung

Die Erfindung betrifft einen Kammkäfig für ein Wälzlager, insbesondere ein Doppelkammkäfig für ein Zylinderrollenlager. Die Erfindung betrifft weiterhin ein Wälzlager mit einem derartigen Kammkäfig sowie ein Verfahren zum Herstellen eines derartigen Kammkäfigs.

### Hintergrund der Erfindung

Wälzlager mit einem Kammkäfig, wie z.B. zweireihige Zylinderrollenlager, werden in der Regel in Werkzeugmaschinen, Wälzgerüsten oder auch großen Getrieben eingesetzt. Zweireihige Zylinderrollenlager umfassen einen Doppelkammkäfig mit einem Ringsteg, von dem beidseitig zueinander versetzte Stege axial herausragen. Zwischen den Stegen sind Aufnahmetaschen gebildet, in welchen die Zylinderrollen gehalten sind. Solche Lager sind in der Regel nicht selbsthaltend, d.h. alle Lagerteile können nicht ohne weiteres getrennt ein- und ausgebaut werden, weil die Wälzkörper herausfallen würden. Dadurch ist die Montage des Lagers, seine Wartung und auch Überprüfung erschwert. Nachteilig ist auch, dass der Stegquerschnitt relativ klein ausgebildet ist und im Betrieb des Lagers ein Steg leicht abbrechen kann. Die US-A-2 611 670, die alle Merkmale des Oberbegriffs des Anspruchs 1 offenbart, hat hier Abhilfe geschaffen, in dem die Bodenseite der Stege breiter ausgefürht ist.

### Aufgabe der Erfindung

Der Erfindung liegt die Aufgabe zugrunde ein möglichst störungsfreies Aus- und Zusammenbauen und ein störungsfreien Betrieb eines Wälzlagers zu ermöglichen, ohne eine Füllnut in einem der Lagerringe zu integrieren.

### Lösung der Aufgabe

Die Aufgabe wird erfindungsgemäß gelöst durch ein Kammkäfig für ein Wälzlager, insbesondere ein Doppelkammkäfig für ein Zylinderrollenlager, gemäß Anspruch 1. Der Kammkäfig umfasst einen Ringsteg mit sich axial erstreckenden Stegen, wobei je zwei benachbarte Stege eine Aufnahmetasche für einen Wälzkörper begrenzen, deren Boden vom Ringsteg gebildet ist, wobei jeder Steg eine radial äußere Grundseite und eine radial innere Grundseite aufweist, die über eine axial äußere Stirnseite miteinander verbunden sind, wobei die Stirnseite von der radial äußeren Grundseite in Richtung zur radial inneren Grundseite verjüngt ist und die radial innere Grundseite derart trapezartig ausgestaltet ist, dass eine Stegbreite der radial inneren Grundseite von der Stirnseite zum Boden der Aufnahmetasche zunimmt.

Unter "trapezartig" wird allgemein eine insbesondere gleichmäßige Zunahme der Stegbreite zum Boden hin verstanden.

Die radial innere Grundseite der Stege weist keine konstante Breite auf, sondern ihre Breite nimmt in Richtung zum Boden der Aufnahmetasche zu und ist am Grund des Steges am breitesten, d.h. an der Stelle wo die Bruchgefahr am größten ist. Dadurch liegt eine gute Anschmiegung des Wälzkörpers auch im hinteren Bereich der Aufnahmetasche im Bereich des Bodens. Ergänzend wird die Spitze des Steges im Bereich der Stirnseite schmaler ausgebildet und die Aufnahmetasche im Bereich der Stirnseiten der Stege ist besonders weit, so dass ein Wälzkörper axial in die Aufnahmetasche eingeführt werden können, ohne dass in den der Lagerringen eine Füllnut erforderlich ist.

Ein wesentlicher Vorteil dieser Ausgestaltung des Kammkäfigs ist darin zu sehen, dass wegen der verringerten Materialabtragung beim Ausbilden der Stege, die einen verdickten Grund aufweisen, die Bruchgefahr deutlich reduziert ist, so dass ein möglichst störungsfreies Aus- und Zusammenbauen und Betrieb des Wälzlagers gewährleistet ist. Zudem wurde die Führung der Wälzkörper dank der erhöhten Umschließung wegen der Form der Stege verbessert. Der lineare Wälzkörper-Steg-Kontakt bleibt stets erhalten, d.h. der Wälzkörper berührt den Steg auf der ganzen Steglänge.

Im Hinblick auf eine besonders gute Führung der Wälzkörper in der Aufnahmetasche weisen die Stege erfindungsgemäß Seitenfläche auf, die der Aufnahmetaschen zugewandt sind, wobei axial entlang der Seitenflächen eine hervorstehende Kante zum Einschnappen des Wälzkörpers in der Aufnahmetasche vorgesehen. Dank der hervorstehenden Kanten wird der Wälzkörper im Kammkäfig verliersicher gehalten und kann nicht ohne die Wirkung einer externen Kraft ausfallen. Hierdurch ist die Montage und eine Wartung vereinfacht.

Eine gute Anpassung der Geometrie der Aufnahmetasche an die Geometrie des Wälzkörpers erfolgt, indem erfindungsgemäß jede Seitenfläche durch die hervorstehende Kante in einen radial äußeren und einen radial inneren Seitenflächenbereich unterteilt ist und zumindest einer der Seitenflächenbereiche konkav ausgebildet sind. Dies bedeutet, dass jede Seitenfläche zwei bogenförmige Seitenflächenbereiche aufweist, die durch die hervorstehende Kante getrennt sind. Die Seitenflächenbereiche weisen insbesondere einen unterschiedlichen Krümmungsradius auf und / oder stehen in einem unterschiedlichen Winkel zum Steg. Durch die Kante wird der Wälzkörper im montierten Zustand daher verliersicher hintergriffen.

Bevorzugt liegt die Kante in einem radial mittleren Bereich der Seitenfläche unter dem Wälzkreis. Die Kante ist insbesondere derart positioniert und orientiert, dass sie nahezu parallel zu einer Mittelachse des Wälzkörpers verläuft, wenn er in der Aufnahmetasche eingesteckt ist, und somit den Wälzkörper entlang seiner Länge abstützt, ohne die Montage eines abbaubaren Lagerrings zu gefährden.

Gemäß einer bevorzugten Variante nimmt die Höhe der Kante in Bezug auf die Seitenfläche mit zunehmender Entfernung vom Boden der Aufnahmetasche insbesondere gleichmäßig zu. Dadurch wird insbesondere die Abnahme der Stegbreite in Richtung zur Stirnseite kompensiert, so dass die Kante auch im Bereich der Spitze des Steges sicher den Wälzkörper eingreifen kann und eine Schnappwirkung erzeugt.

Zweckdienlicherweise weist die radial äußere Grundseite des Steges in Axialrichtung eine konstante Stegbreite auf. Die radial äußere Grundseite der Stege hat somit eine rechteckige Form und ihre sich axial erstreckenden Ränder schließen mit dem Boden der Aufnahmetaschen einen rechten Winkel.

Um eine hohe Steifigkeit der Stege zu erreichen, entspricht bevorzugt die Stegbreite an der radial inneren Grundseite des Steges im Bereich des Bodens der Aufnahmetasche annähend (d.h. bis auf einige Zehntel mm) der Stegbreite an der radial äußeren Grundseite. Die Stegbreiten an der radial inneren und der radial äußeren Grundseiten im untersten Bereich des Steges ist dabei in etwa gleich, so dass eine stabile Grundlage für den Steg bildet ist. Im Gegensatz zur radial äußeren Grundseite schließt die radial innere Grundseite aufgrund ihrer Trapez-Form einen stumpfen Winkel mit dem Boden.

Vorzugsweise ist eine äußere Umfangsseite des Ringstegs breiter ist als eine innere Umfangsseite, so dass mindestens ein Teil des Bodens der Aufnahmetasche geneigt ausgebildet ist. Bevorzugt verläuft ein oberer, an die äußere Umfangsseite anliegender Bodenbereich des Bodens senkrecht zu einer Radialrichtung. Der Boden der Aufnahmetasche, der sich zwischen der äußeren Umfangsseite und der inneren Umfangsseite erstreckt, ist somit bis auf den kleinen, zum Wälzkörper parallelen Bodenbereich, an dem der Käfig axial vom Wälzkörper in Position gehalten wird, schräg, so dass ein guter Durchlass eines Schmiermittels zu den Wälzkörpern ermöglicht ist.

Die Zufuhr des Schmiermittels wird weiterhin erleichtert, indem am Ringsteg bevorzugt Schmiernuten für das Schmiermittels vorgesehen sind. Die Schmiernuten Verlaufen insbesondere sowohl an der äußeren als auch an der inneren Umfangsseite und sind durch Bohrungen im Ringsteg miteinander verbunden, wobei die äußere Schmiemut zur Erzeugung einer hydrodynamischen Schmierung je nach Anwendung weggelassen werden kann.

Die Aufgabe wird erfindungsgemäß weiterhin gelöst durch ein Wälzlager, insbesondere ein Zylinderrollenlager, umfassend einen derartigen Doppelkammkäfig der zwischen einem Innenring und einem Außenring angeordnet ist. Bevorzugt sind dabei der Innenring und der Außenring füllnutfrei, d.h. weder in dem Innenring noch dem Außenring ist eine Füllnut zum Einführen der Wälzkörper ausgebildet, sondern der Wälzkörper wird aufgrund der Form der Aufnahmetasche in diese axial eingeführt.

Die Aufgabe wird erfindungsgemäß außerdem gelöst durch ein Verfahren zum Herstellen eines Kammkäfigs für ein Wälzlager, insbesondere eines Doppelkammkäfigs für ein Zylinderrollenlager, wobei der Kammkäfig einen Ringsteg mit sich axial erstreckenden Stegen umfasst, wobei je zwei benachbarte Stege eine Aufnahmetasche für einen Wälzkörper begrenzen, deren Boden vom Ringsteg gebildet ist, bei dem:
- in einem ersten Bearbeitungsschritt in Axialrichtung ein äußerer Teilbereich der Aufnahmetasche ausgebildet wird, und
- in einem zweiten Bearbeitungsschritt geneigt zur Axialrichtung ein innerer Teilbereich der Aufnahmetasche ausgebildet wird derart, dass eine Stegbreite des inneren Teilbereichs in Richtung zum Boden der Aufnahmetasche zunimmt.

Die in Bezug auf den Kammkäfig bereits angegeben Vorteile und bevorzugten Ausgestaltungen sind sinngemäß auf den Wälzkörper und das Verfahren zu übertragen.

Beim Herstellen des Kammkäfigs erfolgt zunächst ein spannender Materialabtrag bevorzugt durch Fräsen in axialer Richtung im Bereich der äußeren Umfangsseite des Ringsteges, wodurch der radial äußere Teilbereich der Aufnahmetasche entsteht. Das Fräswerkzeug wird dabei parallel zur Axialrichtung und damit senkrecht zum Ringsteg zugestellt bis zu einer axialen Tiefe, bei der der Boden ausgebildet wird. Anschließen wird das Fräswerkzeug je nach Größe des Ringstegs bzw. nach Käfiggröße um einen bestimmten Winkel bezüglich der Axialrichtung geneigt und der innere Teilbereich der Aufnahmetasche wird ausgefräst. Die Zustellbewegung des Fräswerkzeugs erfolgt hierbei schräg zur Axialrichtung, derart dass die Stegtiefe zum Boden hin zunimmt. Das Fräsen im inneren Teilbereich der Stege im zweiten Schritt erfolgt tiefer als im äußeren Teilbereich, wodurch die hervorstehende Kante entsteht, deren Höhe mit Steglänge zum Boden hin abnimmt. Der Boden der Aufnahmetasche wird durch die geneigte Fräsung zum Teil als eine schiefe Ebene ausgebildet.

### Kurze Beschreibung der Zeichnung

Ein Ausführungsbeispiel der Erfindung wird anhand einer Zeichnung näher erläutert. Hierin zeigen schematisch:
- Fig. 1: in einer perspektivischen Darstellung einen Teilschnitt eines Doppelkammkäfigs,
- Fig. 2: eine Vorderansicht in Axialrichtung auf einen Teilschnitt des Doppelkammkäfigs gemäß Fig. 1,
- Fig. 3: einen Schnitt durch die Ebene AA gemäß Fig. 2, und
- Fig. 4: einen Axialschnitt durch ein Zylinderrollenlager mit einem Doppelkammkäfig gemäß Fig. 1.

### Ausführliche Beschreibung der Zeichnung

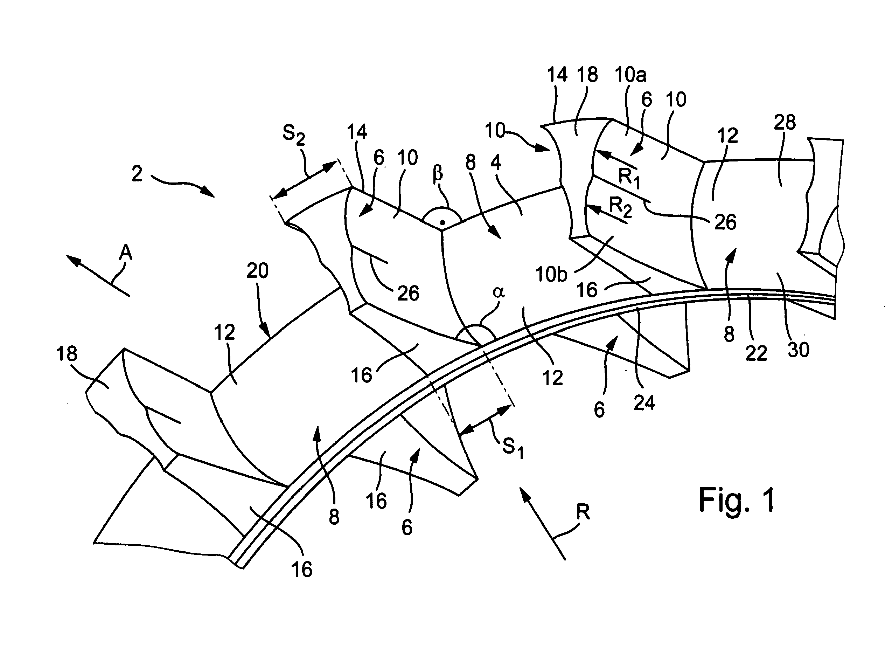

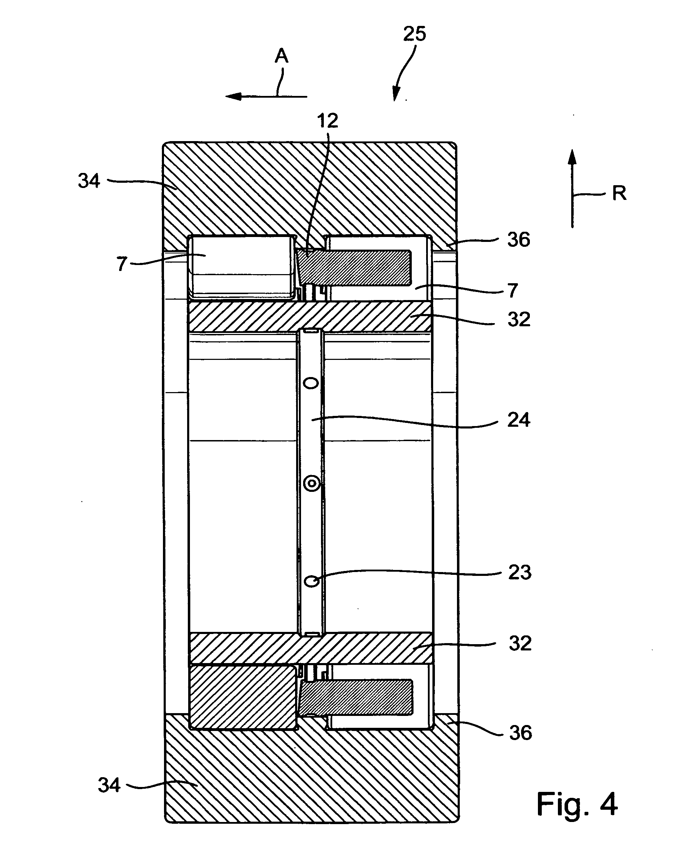

Der Doppelkammkäfig 2 gemäß Figuren 1 bis 3 umfasst einen zentralen Ringsteg 4 von dem beidseitig mehrere Stege 6 in Axialrichtung A herausragen, die zueinander versetzt ausgebildet sind. Zwischen je zwei benachbarten Stegen 6 ist eine U-förmige Aufnahmetasche 8 für einen Wälzkörper 7 nach Art einer Zylinderrolle (siehe Fig. 4) ausgestaltet. Die seitliche Begrenzung der Aufnahmetasche 8 ist durch zwei Seitenflächen 10 zweier benachbarter Stege 6 definiert und ein Boden 12 der Aufnahmetasche 8 ist durch den Ringsteg 4 gebildet. Die Stege 6 weisen außerdem je eine radial äußere Grundseite 14 und eine radial innere Grundseite 16 auf. Die Grundseiten 14, 16 und die Seitenflächen 10 sind miteinander über eine axial äußere Stirnseite 18 verbunden.

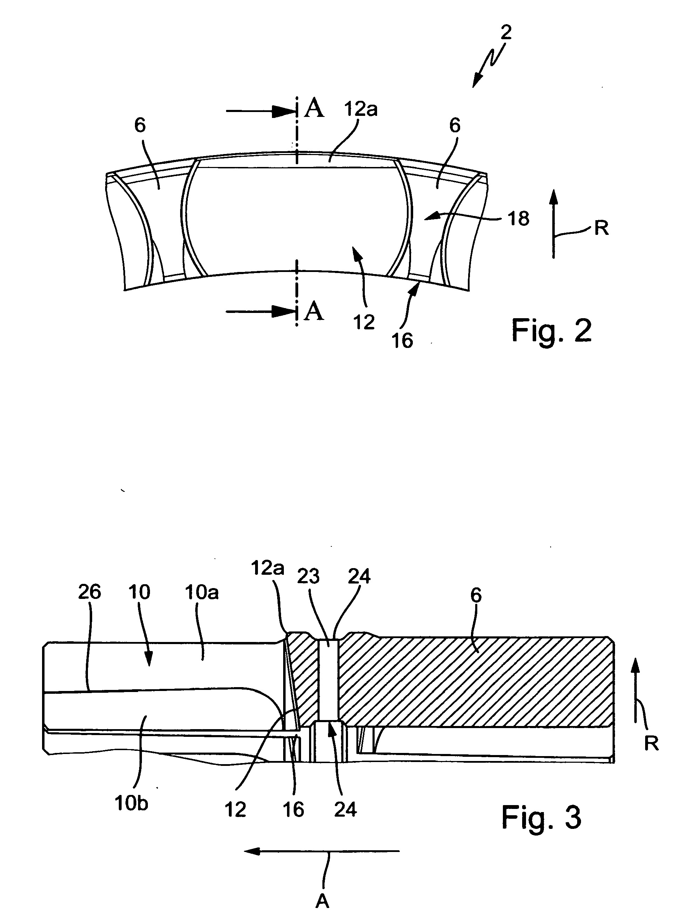

Der Ringsteg 4 weist eine äußere Umfangsseite 20 und eine innere Umfangsseite 22 auf, wobei die innere Umfangsseite 12 schmaler ist, so das der Boden 12 der Aufnahmetaschen 8 bis auf einen schmalen Bodenbereich 12a (siehe Fig. 2) geneigt zur Radialrichtung R steht. Der Bodenbereich 12a grenzt an die äußere Umfangsseite 20 an und verläuft parallel zur Radialrichtung R. Auf den Umfangsseiten 20, 22 sind Schmiernuten 24 für ein Schmiermittel vorgesehen, die über Schmierbohrungen 23 miteinander verbunden sind.

Durch die spezielle Ausgestaltung der Stege 6 ist beim Ein- oder Ausbauen und Betrieb des Lagers eine Bruchgefahr reduziert und eine verliersichere Haltung der Wälzkörper 7 erreicht. Zur Verbesserung ihrer Steifigkeit weisen die Stege 6 eine zum Boden 12 hin zunehmende Breite auf, wobei die breiteste Stelle sich im Bereich des Bodens 12 befindet und eine Stegbreite S₁ aufweist. Die gleichmäßige Verdickung des Steges 6 ist anhand der Trapez-Form der radial inneren Grundseite 16 besonders gut erkennbar, die einen Winkel α>90° mit dem Boden 12 schließt.

Die radial äußere Grundseite 14 weist im Gegenteil dazu eine konstante Breite S₂ auf. Dabei gilt, dass die Stegbreite S₁ der radial inneren Grundseite 16 an der breitesten Stelle der Stegbreite S₂ der radial äußeren Grundseite 14 entspricht. Die radial äußere Grundseite 14 hat aufgrund ihrer konstanten Breite S₂ die Form eines Rechtecks und schließt mit dem Boden 12 der Aufnahmetasche 8 einen rechten Winkel β.

Die sichere Haltung der Wälzkörper 7 erfolgt mittels einer hervorstehenden Kante 26, die sich in einem radial mittleren Bereich der Seitenflächen 10 der Stege 6 erstreckt und eine Schnappfunktion beim Einführen des Wälzkörpers 7 in die Aufnahmetasche 8 ausführt. Die Kante 26 ist derart orientiert, dass sie im zusammengebauten Zustand des Lagers 25 (seihe Fig. 2) parallel zur Mittelachse des in der Aufnahmetasche eingelegten Wälzkörpers 7 verläuft. Die Höhe der Kante 26 nimmt dabei mit zunehmender Entfernung vom Boden 12 der Aufnahmetasche 8 linear zu.

Die Kante 26 teilt die Seitenfläche 10 in einen äußeren Seitenflächenbereich 10a und einen inneren Seitenflächenbereich 10b auf, wobei wie aus Fig. 3 ersichtlich, der innere Seitenflächenbereich 10b nicht bis zum Boden 12 reicht. Der äußere Seitenflächenbereich 10a weist einen Krümmungsradius R₁ auf, der sich vom Krümmungsradius R₂ des inneren Seitenflächenbereichs 10b unterscheidet. Dabei ist der Krümmungsradius R₁ größer als R₂, um eine Führung des Wälzkörpers am Wälzkreis sicher zu stellen.

Die Formgebung der Stege 6 bzw. der Aufnahmetaschen 8 erfolgt in zwei Herstellungsschritten. Im ersten Schritt wird ein Fräswerkzeug axial verfahren und ein äußerer Teilbereich 28, seitlich begrenzt durch die äußeren Seitenflächenbereiche 10a zweier Stege 6, wird ausgefräst. Anschließend wird das Fräswerkzeug um einen vorgegebenen Winkel geneigt gegenüber der Axialrichtung eingesetzt, wobei ein innerer Teilbereich 30 der Aufnahmetasche 8 ausgebildet wird. An der Grenze der beiden Teilbereiche 28, 30 entsteht dabei die Kante 26. Der geneigte Boden 12 wird ebenfalls während des zweiten Fräsvorgangs mit dem geneigten Fräswerkzeug ausgebildet.

Der Doppelkammkäfig 2 ist insbesondere für ein Zylinderrollenlager 25 vorgesehen und ist im zusammengebauten Zustand des Zylinderrollenlagers 25 zwischen einem Innenring 32 und einem Außenring 34 mit seitlichen Borden 36 angeordnet. Aufgrund der Ausgestaltung der Stege 6, deren Spitzen dünner sind als der Grund im Bereich des Bodens 12, kann der Wälzkörper 7 axial am Bord 36 vorbei eingesteckt werden, wobei er von den Kanten 26 eingeschnappt wird. Dank der Schnappfunktion der Kanten 26 kann der Wälzkörper 7 nicht herausfallen, auch wenn er sich bei der Montage oder Demontage des Lagers 25 nicht auf dem Innenring 32 abstützen kann.

Bei der beschrieben Ausführung sind die Borden 36 am Außenring 34 angeordnet. Das Käfig-Konzept kann ebenfalls auf das Lager übertragen werden, die einen bordlosen Außenring 34 und einen mit Borden 36 ausgeführten Innenring 32 aufweisen. In diesem Fall wird der Ringsteg 4 in radial äußere Richtung R schmaler. Der senkrechte Bodenbereich 12a wird dabei radial innen angeordnet sein.

Der Einsatz dieses Konzeptes kann ebenfalls bei einem wälzkörpergeführten Käfig zustande kommen. In diesem Fall muss in Abhängigkeit der Lagerabmaße entschieden werden, ob der Bodenbereich 12a radial innen oder außen liegen soll.

Das vorgeschlagene Konzept zum Ausbilden des Käfigs kann auch in Kombination einer Füllnut eingesetzt werden. Ein entscheidender Vorteil dabei ist, dass die Füllnut wesentlich kleiner ausgeführt werden kann als bei einem herkömmlichen Lager und dadurch der Lauf des Lagers wesentlich verbessert ist.

### Liste der Bezugszahlen

- 2: Kammkäfig
- 4: Ringsteg
- 6: Steg
- 7: Wälzkörper
- 8: Aufnahmetasche
- 10: Seitenfläche
- 10a: äußerer Seitenflächenbereich
- 10b: innerer Seitenflächenbereich
- 12: Boden
- 12a: Bodenbereich
- 14: radial äußere Grundseite
- 16: radial innere Grundseite
- 18: Stirnseite
- 20: äußere Umfangsseite
- 22: innere Umfangsseite
- 23: Schmierbohrung
- 24: Schmiernut
- 25: Zylinderrollenlager
- 26: Kante
- 28: äußerer Teilbereich der Aufnahmetasche
- 30: innerer Teilbereich der Aufnahmetasche

- 32: Innenring
- 34: Außenring
- 36: Bord

- A: Axialrichtung
- AA: Schnittebene
- R: Radialrichtung
- R₁, R₂: Krümmungsradius

- S₁: Stegbreite der radial inneren Grundseite
- S₂: Stegbreite der radial äußeren Grundseite
- α: Winkel
- β: Winkel

## Patentansprüche

1. Kammkäfig (2) für ein Wälzlager, insbesondere ein Doppelkammkäfig für ein Zylinderrollenlager, umfassend einen Ringsteg (4) mit sich axial erstreckenden Stegen (6), wobei je zwei benachbarte Stege (6) eine Aufnahmetasche (8) für einen Wälzkörper begrenzen, deren Boden (12) vom Ringsteg (4) gebildet ist, wobei jeder Steg (6) eine radial äußere Grundseite (14) und eine radial innere Grundseite (16) aufweist, die über eine axial äußere Stirnseite (18) miteinander verbunden sind, wobei die Stirnseite (18) von der radial äußeren Grundseite (16) in Richtung zur radial inneren Grundseite (16) verjüngt ist und die radial innere Grundseite (16) derart trapezartig ausgestaltet ist, dass eine Stegbreite (S₁) der radial inneren Grundseite (16) von der Stirnseite (18) zum Boden (12) der Aufnahmetasche (8) zunimmt, **dadurch gekennzeichnet, dass** die Stege (6) Seitenflächen (10) aufweisen, die der Aufnahmetasche (8) zugewandt sind, und wobei axial entlang der Seitenflächen (10) eine hervorstehende Kante (26) zum Einschnappen des Wälzkörpers (7) in der Aufnahmetasche (8) vorgesehen ist und dass die Seitenflächen (10) durch die hervorstehende Kante (26) in einen radial äußeren und einen radial inneren Seitenflächenbereich (10a, 10b) unterteilt sind und zumindest einer der Seitenflächenbereiche (10a, 10b) konkav ausgebildet ist.

2. Kammkäfig (2) nach Anspruch 1,
wobei die Kante (26) in einem radial mittleren Bereich der Seitenfläche (10) unter dem Wälzkreis liegt.

3. Kammkäfig (2) nach einem der Ansprüche 1 oder 2,
wobei die Höhe der Kante (26) in Bezug auf die Seitenfläche (10) mit zunehmender Entfernung vom Boden (12) der Aufnahmetasche (8) zunimmt.

4. Kammkäfig (2) nach einem der vorhergehenden Ansprüche, wobei die radial äußere Grundseite (14) des Steges (6) in Axialrichtung (A) eine konstante Stegbreite (S₂) aufweist.

5. Kammkäfig (2) nach einem der vorhergehenden Ansprüche, wobei die Stegbreite (S₁) an der radial inneren Grundseite (16) des Steges (6) im Bereich des Bodens (12) der Aufnahmetasche (8) annähend der Stegbreite (S₂) an der radial äußeren Grundseite (14) entspricht.

6. Kammkäfig (2) nach einem der vorhergehenden Ansprüche, wobei eine äußere Umfangsseite (20) des Ringstegs (4) breiter ist als eine innere Umfangsseite (22), so dass mindestens ein Teil des Bodens (12) der Aufnahmetasche (8) geneigt ausgebindet ist.

7. Kammkäfig (2) nach Anspruch 6,
wobei ein oberer, an die äußere Umfangsseite (20) anliegender Bodenbereich (12a) des Bodens (12) senkrecht zu einer Radialrichtung (R) verläuft.

8. Kammkäfig (2) nach einem der vorhergehenden Ansprüche wobei am Ringsteg (4) Schmiernuten (24) für ein Schmiermittel vorgesehen sind.

9. Wälzlager (25), insbesondere ein Zylinderrollenlager, umfassend einen Kammkäfig (2) nach einem der vorhergehenden Ansprüche, der zwischen einem Innenring (32) und einem Außenring (34) angeordnet ist.

10. Wälzlager (25) nach Anspruch 9,
wobei der Innenring (32) und der Außenring (34) füllnutfrei sind.

11. Verfahren zum Herstellen eines Kammkäfigs (2) für ein Wälzlager (25), insbesondere eines Doppelkammkäfigs für ein Zylinderrollenlager, wobei der Kammkäfig (2) einen Ringsteg (4) mit sich axial erstreckenden Stegen (6) umfasst, wobei je zwei benachbarte Stege (6) eine Aufnahmetasche (8) für einen Wälzkörper (7) begrenzen, deren Boden (12) vom Ringsteg (4) gebildet ist, bei dem:
- in einem ersten Bearbeitungsschritt in Axialrichtung (A) ein äußerer Teilbereich (28) der Aufnahmetasche (8) ausgebildet wird, und
- in einem zweiten Bearbeitungsschritt geneigt zur Axialrichtung (A) ein innerer Teilbereich (30) der Aufnahmetasche (8) ausgebildet wird derart, dass eine Stegbreite (S₁) des inneren Teilbereichs (30) in Richtung zum Boden (12) der Aufnahmetasche (8) zunimmt.

## Claims

1. Roller cage (2) for a rolling bearing, particularly a double roller cage for a cylinder rolling bearing, comprising an annular web (4) with axially extending webs (6), in each case two adjacent webs (6) delimiting a receiving pocket (8) for a rolling body, the bottom (12) of which receiving pocket (8) is formed by the annular web (4), each web (6) having a radially outer base side (14) and a radially inner base side (16) which are connected to one another via an axially outer end side (18), the end side (18) being tapered from the radially outer base side (16) in the direction of the radially inner base side (16), and the radially inner base side (16) being of trapezoidal configuration in such a way that a web width (S₁) of the radially inner base side (16) increases from the end side (18) to the bottom (12) of the receiving pocket (8), **characterized in that** the webs (6) have side faces (10) which face the receiving pocket (8), and a projecting edge (26) being provided axially along the side faces (10) for snapping the rolling body (7) in the receiving pocket (8), and **in that** the side faces (10) are divided by the projecting edge (26) into a radially outer and a radially inner side face region (10a, 10b) and at least one of the side face regions (10a, 10b) is of concave configuration.

2. Roller cage (2) according to Claim 1, the edge (26) lying in a radially central region of the side face (10) under the rolling circle.

3. Roller cage (2) according to one of Claims 1 and 2, the height of the edge (26) increasing in relation to the side face (10) as the distance from the bottom (12) of the receiving pocket (8) increases.

4. Roller cage (2) according to one of the preceding claims, the radially outer base side (14) of the web (6) having a constant web width (S₂) in the axial direction (A).

5. Roller cage (2) according to one of the preceding claims, the web width (S₁) on the radially inner base side (16) of the web (6) corresponding in the region of the bottom (12) of the receiving pocket (8) approximately to the web width (S₂) on the radially outer base side (14).

6. Roller cage (2) according to one of the preceding claims, an outer circumferential side (20) of the annular web (4) being wider than an inner circumferential side (22), with the result that at least one part of the bottom (12) of the receiving pocket (8) is of inclined configuration.

7. Roller cage (2) according to Claim 6, an upper bottom region (12a) of the bottom (12), which bottom region (12a) bears against the outer circumferential side (20), extending perpendicularly with respect to a radial direction (R).

8. Roller cage (2) according to one of the preceding claims, lubricating grooves (24) for a lubricant being provided on the annular web (4).

9. Rolling bearing (25), particularly a cylinder rolling bearing, comprising a roller cage (2) according to one of the preceding claims which is arranged between an inner ring (32) and an outer ring (34).

10. Rolling bearing (25) according to Claim 9, the inner ring (32) and the outer ring (34) being free of filling notches.

11. Method for producing a roller cage (2) for a rolling bearing (25), particularly a double roller cage for a cylinder rolling bearing, the roller cage (2) comprising an annular web (4) with axially extending webs (6), in each case two adjacent webs (6) delimiting a receiving pocket (8) for a rolling body (7), the bottom (12) of which receiving pocket (8) is formed by the annular web (4), in which method:
- an outer part region (28) of the receiving pocket (8) is formed in a first machining step in the axial direction (A), and
- an inner part region (30) of the receiving pocket (8) is formed in a second machining step in an inclined manner with respect to the axial direction (A), in such a way that a web width (S₁) of the inner part region (30) increases in the direction of the bottom (12) of the receiving pocket (8).

## Revendications

1. Cage en forme de peigne (2) pour un palier à roulement, en particulier cage double en forme de peigne pour un palier à rouleaux cylindriques, comportant une nervure annulaire (4) pourvue de nervures (6) s'étendant axialement, deux nervures voisines (6) délimitant à chaque fois une poche de réception (8) pour un corps de roulement, le fond (12) de la poche de réception étant formé par la nervure annulaire (4), chaque nervure (6) comprenant une face de base (14) radialement extérieure et une face de base (16) radialement intérieure, lesquelles sont reliées l'une à l'autre par le biais d'une face frontale (18) axialement extérieure, la face frontale (18) se rétrécissant à partir de la face de base (16) radialement extérieure en direction de la face de base (16) radialement intérieure et la face de base (16) radialement intérieure étant configurée de manière trapézoïdale de telle sorte qu'une largeur de nervure (S₁) de la face de base (16) radialement intérieure augmente à partir de la face frontale (18) jusqu'au fond (12) de la poche de réception (8), **caractérisée en ce que** les nervures (6) comprennent des surfaces latérales (10) qui sont tournées vers la poche de réception (8), et une arête saillante (26) étant prévue axialement le long des surfaces latérales (10) pour encliqueter le corps de roulement (7) dans la poche de réception (8), et **en ce que** les surfaces latérales (10) sont divisées par l'arête saillante (26) en une région de surface latérale radialement extérieure et une région de surface latérale radialement intérieure (10a, 10b) et au moins l'une des régions de surface latérale (10a, 10b) est concave.

2. Cage en forme de peigne (2) selon la revendication 1,
dans laquelle l'arête (26) se situe sous le cercle de roulement dans une région radialement centrale de la surface latérale (10).

3. Cage en forme de peigne (2) selon l'une quelconque des revendications 1 et 2,
dans laquelle la hauteur de l'arête (26) par rapport à la surface latérale (10) augmente au fur et à mesure que l'on s'éloigne du fond (12) de la poche de réception (8).

4. Cage en forme de peigne (2) selon l'une quelconque des revendications précédentes,
dans laquelle la face de base (14) radialement extérieure de la nervure (6) présente une largeur de nervure (S₂) constante dans la direction axiale (A).

5. Cage en forme de peigne (2) selon l'une quelconque des revendications précédentes,
dans laquelle la largeur de nervure (S₁) au niveau de la face de base (16) radialement intérieure de la nervure (6) dans la région du fond (12) de la poche de réception (8) correspond approximativement à la largeur de nervure (S₂) au niveau de la face de base (14) radialement extérieure.

6. Cage en forme de peigne (2) selon l'une quelconque des revendications précédentes,
dans laquelle une face périphérique extérieure (20) de la nervure annulaire (4) est plus large qu'une face périphérique intérieure (22), de telle sorte qu'au moins une partie du fond (12) de la poche de réception (8) soit réalisée de manière inclinée.

7. Cage en forme de peigne (2) selon la revendication 6,
dans laquelle une région de fond (12a), s'appliquant contre la face périphérique extérieure (20), du fond (12) s'étend perpendiculairement à une direction radiale (R).

8. Cage en forme de peigne (2) selon l'une quelconque des revendications précédentes,
dans laquelle des rainures de lubrification (24) pour un lubrifiant sont prévues sur la nervure annulaire (4).

9. Palier à roulement (25), en particulier palier à rouleaux cylindriques, comportant une cage en forme de peigne (2) selon l'une quelconque des revendications précédentes, laquelle cage est disposée entre une bague intérieure (32) et une bague extérieure (34).

10. Palier à roulement (25) selon la revendication 9, dans lequel la bague intérieure (32) et la bague extérieure (34) sont exemptes de rainures de remplissage.

11. Procédé de fabrication d'une cage en forme de peigne (2) pour un palier à roulement (25), en particulier d'une cage double en forme de peigne pour un palier à rouleaux cylindriques, la cage en forme de peigne (2) comportant une nervure annulaire (4) pourvue de nervures (6) s'étendant axialement, deux nervures voisines (6) délimitant à chaque fois une poche de réception (8) pour un corps de roulement (7), le fond (12) de la poche de réception étant formé par la nervure annulaire 4, dans lequel procécé :
- lors d'une première étape d'usinage, une région partielle extérieure (28) de la poche de réception (8) est réalisée dans la direction axiale (A) et
- lors d'une deuxième étape d'usinage, une région partielle intérieure (30) de la poche de réception (8) est réalisée de manière inclinée par rapport à la direction axiale (A), de telle sorte qu'une largeur de nervure (S₁) de la région partielle intérieure (30) augmente en direction du fond (12) de la poche de réception (8).
